(19) Europäisches Patentamt
European Patent Office
Office européen des brevets

(11) **EP 3 840 282 A1**

(12) **DEMANDE DE BREVET EUROPEEN**

(43) Date de publication:
**23.06.2021 Bulletin 2021/25**

(51) Int Cl.:
**H04L 9/00** (2006.01)

(21) Numéro de dépôt: **20213485.4**

(22) Date de dépôt: **11.12.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
**KH MA MD TN**

(30) Priorité: **20.12.2019 FR 1915071**

(71) Demandeur: **IDEMIA France**
**92400 Courbevoie (FR)**

(72) Inventeurs:
• **BATTISTELLO, Alberto**
**92400 Courbevoie (FR)**
• **CASTELNOVI, Laurent**
**92400 Courbevoie (FR)**
• **CHABRIER, Thomas**
**92400 Courbevoie (FR)**

(74) Mandataire: **Jacobacci Coralis Harle**
**32, rue de l'Arcade**
**75008 Paris (FR)**

(54) **PROCÉDÉ DE TRAITEMENT CRYPTOGRAPHIQUE, DISPOSITIF ÉLECTRONIQUE ET PROGRAMME D'ORDINATEUR ASSOCIÉS**

(57) Un procédé de traitement cryptographique transformant un multiplet d'entrée en un multiplet de sortie comprend les étapes suivantes :
- conversion d'une pluralité de mots, comprenant chacun au moins un bit du multiplet d'entrée, en cryptogrammes d'entrée par application, à chacun desdits mots, d'une fonction de chiffrement homomorphe d'un premier groupe vers un second groupe muni d'une opération ;
- obtention de cryptogrammes de sortie en fonction des cryptogrammes d'entrée, cette étape d'obtention incluant au moins un traitement au cours duquel ladite opération est appliquée à deux cryptogrammes intermédiaires, ce traitement produisant un cryptogramme image par la fonction de chiffrement homomorphe d'un mot incluant une combinaison logique booléenne de deux bits compris respectivement dans deux mots antécédents, pour la fonction de chiffrement homomorphe, desdits deux cryptogrammes intermédiaires ;
- détermination de bits du multiplet de sortie en appliquant respectivement aux cryptogrammes de sortie une fonction inverse de la fonction de chiffrement homomorphe.

Un dispositif électronique et un programme d'ordinateur associés sont également proposés.

**Fig.2**

**Description**

La présente invention concerne le domaine technique de la cryptographie.

Elle concerne plus particulièrement un procédé de traitement cryptographique, ainsi qu'un dispositif électronique et un programme d'ordinateur associés.

Lorsqu'un algorithme cryptographique est mis en œuvre au moyen d'un logiciel exécuté dans un environnement non sécurisé, des mesures particulières doivent être prises pour éviter qu'un attaquant puisse avoir accès à des données secrètes (par exemple des clés cryptographiques) en prenant simplement le contrôle de cet environnement.

La recherche de techniques permettant de sécuriser la mise en œuvre d'un algorithme cryptographique dans un environnement non sécurisé est connue sous le nom de cryptographie en boîte blanche (en anglais : *"white box cryptogrophy"*).

L'article *"White Box Cryptogrophy and on AES implementation"*, de S. Chow et al. in, Post-Proceedings of the 9th Annual Workshop on Selected Areas in Cryptography (SAC'02), 15-16 août 2002 propose par exemple une technique pour produire des algorithmes de type AES adaptés chacun à une clé cryptographique particulière.

Dans les solutions généralement proposées dans ce cadre, l'algorithme cryptographique est décomposé en une série de traitements élémentaires et des tables de correspondance (en anglais : *"Look-Up Tables"*) associées respectivement à ces traitements élémentaires sont utilisées pour manipuler des données masquées.

Ces solutions sont particulièrement consommatrices de mémoire du fait de l'utilisation de ces nombreuses tables de correspondance.

Dans ce contexte, l'invention propose un procédé de traitement cryptographique transformant un multiplet d'entrée en un multiplet de sortie, caractérisé par les étapes suivantes :

-  conversion d'une pluralité de mots, comprenant chacun au moins un bit du multiplet d'entrée, en cryptogrammes d'entrée par application, à chacun desdits mots, d'une fonction de chiffrement homomorphe d'un premier groupe vers un second groupe muni d'une opération ;

-  obtention de cryptogrammes de sortie en fonction des cryptogrammes d'entrée, cette étape d'obtention incluant au moins un traitement au cours duquel ladite opération est appliquée à deux cryptogrammes intermédiaires, ce traitement produisant un cryptogramme image par la fonction de chiffrement homomorphe d'un mot incluant une combinaison logique booléenne de deux bits compris respectivement dans deux mots antécédents, pour la fonction de chiffrement homomorphe, desdits deux cryptogrammes intermédiaires ;

-  détermination de bits du multiplet de sortie en appliquant respectivement aux cryptogrammes de sortie une fonction inverse de la fonction de chiffrement homomorphe.

L'opération appliquée aux deux cryptogrammes intermédiaires revient à effectuer une addition ou une multiplication de mots correspondants (au sens de la fonction de chiffrement homomorphe) et ainsi, avec peu ou pas de manipulation supplémentaire au sein du traitement précité, une combinaison logique booléenne de deux bits respectifs de ces mots correspondants.

Les manipulations supplémentaires (en sus de l'application de l'opération précitée) étant limitées, le nombre de tables de correspondance nécessaires est moins important que dans les solutions classiques.

On peut prévoir que, pour chaque cryptogramme intermédiaire, l'antécédent de ce cryptogramme intermédiaire par la fonction de chiffrement homomorphe comprenne un premier bit et un second bit, de poids immédiatement supérieur au premier bit, ayant une valeur prédéfinie. Autrement dit, chaque cryptogramme intermédiaire est l'image, par la fonction de chiffrement homomorphe, d'un mot comprenant un premier bit et un second bit, de poids immédiatement supérieur à celui du premier bit, ayant cette valeur prédéfinie.

L'étape de conversion peut être appliquée par exemple à des mots comprenant chacun un premier bit égal à un bit du multiplet d'entrée et un second bit, de poids immédiatement supérieur au premier bit, ayant une valeur prédéfinie (telle que la valeur nulle).

Le procédé peut éventuellement comprendre une étape de détermination par tirage aléatoire d'un mot binaire comprenant au moins un bit ; l'étape de conversion peut dans ce cas être appliquée à des mots comprenant chacun ledit mot binaire et un bit donné égal à un bit du multiplet d'entrée. Le bit de poids le plus faible issu du mot binaire peut alors par exemple être de poids immédiatement supérieur au poids du bit donné, ou être seulement de poids supérieur au poids du bit donné (un bit de valeur prédéfinie, par exemple de valeur nulle, pouvant dans ce dernier cas être intercalé entre ledit mot binaire et le bit donné égal au bit du multiplet d'entrée).

L'étape de conversion peut être appliquée en pratique à des mots comprenant chacun une pluralité de bits du multiplet d'entrée.

Le traitement susmentionné peut comprendre dans certains cas la lecture d'un cryptogramme associé, dans une table de correspondance, au résultat de l'opération appliquée aux deux cryptogrammes intermédiaires. Cette lecture fournit par exemple le cryptogramme image (par la fonction de chiffrement homomorphe) d'un mot obtenu par une manipulation particulière (tel qu'un décalage d'un bit vers la droite) à partir d'un antécédent (au sens de la fonction de chiffrement homomorphe) dudit résultat de l'opération.

L'étape de conversion peut comprendre en outre une étape d'application de l'opération à un cryptogramme d'entrée et à un masque. Ce masque est par exemple déterminé aléatoirement au préalable et mémorisé dans un module de mémorisation.

L'étape d'obtention peut comprendre une étape de combinaison de deux cryptogrammes d'entrée par une fonction de recombinaison selon le théorème des restes chinois. Les cryptogrammes ainsi combinés pourront être traités simultanément, ce qui réduit le nombre d'opération du second groupe à effectuer.

L'opération est par exemple une multiplication ; le second groupe peut être en pratique un corps fini. Le second groupe peut d'ailleurs être distinct du premier groupe.

L'invention propose également un dispositif électronique comprenant un processeur et une mémoire stockant des instructions de programme d'ordinateur conçues pour mettre en œuvre les étapes suivantes lorsque ces instructions sont exécutées par le processeur :

- conversion d'une pluralité de mots, comprenant chacun au moins un bit d'un multiplet d'entrée, en cryptogrammes d'entrée par application, à chacun desdits mots, d'une fonction de chiffrement homomorphe d'un premier groupe vers un second groupe muni d'une opération ;

- obtention de cryptogrammes de sortie en fonction des cryptogrammes d'entrée, cette étape d'obtention incluant au moins un traitement au cours duquel ladite opération est appliquée à deux cryptogrammes intermédiaires, ce traitement produisant un cryptogramme image par la fonction de chiffrement homomorphe d'un mot incluant une combinaison logique booléenne de deux bits compris respectivement dans deux mots antécédents, pour la fonction de chiffrement homomorphe, desdits deux cryptogrammes intermédiaires ;

- détermination de bits d'un multiplet de sortie en appliquant respectivement aux cryptogrammes de sortie une fonction inverse de la fonction de chiffrement homomorphe.

L'invention propose enfin un programme d'ordinateur comprenant des instructions conçues pour mettre en œuvre les étapes suivantes lorsque ces instructions sont exécutées par un processeur :

- conversion d'une pluralité de mots, comprenant chacun au moins un bit d'un multiplet d'entrée, en cryptogrammes d'entrée par application, à chacun desdits mots, d'une fonction de chiffrement homomorphe d'un premier groupe vers un second groupe muni d'une opération ;

- obtention de cryptogrammes de sortie en fonction des cryptogrammes d'entrée, cette étape d'obtention incluant au moins un traitement au cours duquel ladite opération est appliquée à deux cryptogrammes intermédiaires, ce traitement produisant un cryptogramme image par la fonction de chiffrement homomorphe d'un mot incluant une combinaison logique booléenne de deux bits compris respectivement dans deux mots antécédents, pour la fonction de chiffrement homomorphe, desdits deux cryptogrammes intermédiaires ;

- détermination de bits d'un multiplet de sortie en appliquant respectivement aux cryptogrammes de sortie une fonction inverse de la fonction de chiffrement homomorphe.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :

- la figure 1 représente schématiquement un dispositif électronique conforme à l'invention, et

- la figure 2 est un logigramme montrant les étapes principales d'un procédé conforme à l'invention.

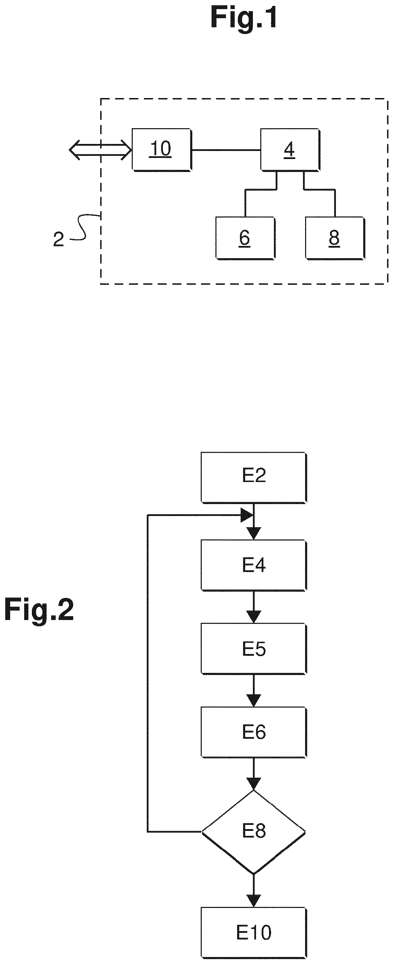

La figure 1 représente schématiquement un dispositif électronique 2 comprenant un processeur 4 (par exemple un microprocesseur), un module de mémorisation 6, une mémoire vive 8 et un module de communication 10.

Le module de mémorisation 6 mémorise des instructions de programme d'ordinateur conçues pour mettre en œuvre un procédé de traitement cryptographique tel que celui décrit ci-dessous en référence à la figure 2 lorsque ces instructions sont exécutées par le processeur 4. Le module de mémorisation 6 est par exemple en pratique un disque dur ou une mémoire non-volatile (éventuellement réinscriptible).

La mémoire vive 8 peut quant à elle mémoriser certains au moins des éléments (notamment les multiplets et cryptogrammes) manipulés lors des différents traitements effectués au cours du procédé de la figure 2.

Le module de communication 10 est relié au processeur 4 de manière à permettre au processeur 4 de recevoir des données en provenance d'un autre dispositif électronique (non représenté) et/ou d'émettre des données à destination d'un autre dispositif électronique (non représenté).

Selon une possibilité de réalisation, les instructions de programme d'ordinateur mémorisées dans le module de mémorisation 6 ont par exemple été reçues (par exemple d'un ordinateur distant) lors d'une phase de fonctionnement du dispositif électronique 2 antérieure au procédé décrit ci-dessous en référence à la figure 2.

L'invention s'applique en particulier lorsque le dispositif électronique 2 n'est pas sécurisé et qu'un attaquant peut donc avoir accès au fonctionnement interne du dispositif électronique 2, et ainsi aux traitements effectués par le processeur 4 et aux données manipulées lors de ces traitements. (C'est le cadre de la cryptographie en boîte blanche mentionnée en introduction.)

La figure 2 montre les étapes principales d'un procédé de traitement cryptographique conforme à l'invention. Ce procédé de traitement cryptographique est ici mis en œuvre par le dispositif électronique 2 (du fait de l'exécution des instructions de programme d'ordinateur mémorisées dans le module de mémorisation 6 comme indiqué ci-dessus).

Un tel procédé permet de transformer un multiplet d'entrée I en un multiplet de sortie O au moyen d'opérations logiques booléennes, comme décrit par exemple dans l'article "A new combinational logic minimization technique with applications to cryptology", de J. Boyar et R. Peralta, in International Symposium on Experimental Algorithms, Springer, Berlin, Heidelberg, 2010.

On note $I_i$ les bits du multiplet d'entrée I. Ce multiplet d'entrée I s'écrit donc sous forme binaire : $(I_{N-1}\|I_{N-2}\|...\|I_1\|I_0)$, où $\|$ est l'opérateur de concaténation, N est le nombre de bits du multiplet d'entrée I (ici : N = 8), $I_{N-1}$ le bit de poids fort du multiplet d'entrée I et $I_0$ le bit de poids faible du multiplet d'entrée I. (Dans d'autres applications, N peut avoir une valeur différente de 8, par exemple N = 128 dans le cadre d'un algorithme AES. N est par exemple compris entre 8 et 256.)

Le procédé de la figure 2 débute par une étape E2 à laquelle le processeur 4 convertit une pluralité de mots $M_i$ en une pluralité respective de cryptogrammes d'entrée $C_i$ au moyen d'une fonction de chiffrement homomorphe B.

Chacun des mots $M_i$ comprend au moins un bit $I_j$ du multiplet d'entrée I et constitue un élément d'un premier groupe (fini) G. Ce premier groupe G est un groupe additif dans l'exemple décrit ici mais pourrait en variante être un groupe multiplicatif, comme expliqué à nouveau ci-dessous.

On peut prévoir en pratique que chaque mot $M_i$ comprenne un premier bit égal à un bit $I_j$ du multiplet d'entrée I et un second bit, de poids immédiatement supérieur au premier bit, ayant une valeur prédéfinie (ici : 0 ; en variante : 1).

Selon le mode de réalisation décrit ici, chaque mot $M_i$ comprend exactement (par exemple en tant que bit de poids faible) un bit I du multiplet d'entrée I.

L'étape de conversion E2 utilise donc ici N mots $M_i$ respectivement associés aux N bits $I_i$ du multiplet d'entrée I.

La valeur prédéfinie susmentionnée valant ici 0, chaque mot $M_i$ s'écrit dans le cas présent :

$$M_i = (0 \mid \mid I_i).$$

Chaque mot $M_i$ s'écrit dans ce cas sur 2 bits.

On pourrait prévoir en outre de compléter chaque mot $M_i$ par des bits aléatoires $s_i$ (déterminés par exemple aléatoirement lors de l'étape E2). Dans ce cas, chaque mot $M_i$ s'écrit :

$$M_i = (s_\sigma \mid \mid ... \mid \mid s_1 \mid \mid 0 \mid \mid I_i),$$

où $\sigma$ est le nombre de bits aléatoires utilisés.

En variante, chaque mot $M_i$ pourrait être construit comme suit (le bit 0 pouvant être intercalé lors de l'étape de nettoyage E4 décrite ci-dessous) :

$$M_i = (s_\sigma \mid \mid ... \mid \mid s_1 \mid \mid I_i).$$

Selon un autre mode de réalisation envisageable, chaque mot $M_i$ pourrait comprendre plusieurs bits $I_j$ du multiplet d'entrée I. Ainsi, chaque mot $M_i$ pourrait par exemple comprendre deux bits $I_j$ du multiplet d'entrée I et s'écrire :

$$M_i = (0 \mid\mid I_{2i+1} \mid\mid 0 \mid\mid I_{2i}).$$

Dans ce dernier cas, l'étape E2 utilise N/2 mots $M_i$.

La fonction de chiffrement homomorphe B est une fonction du premier groupe G vers un second groupe G' muni d'une opération (ici notée par le symbole ".") et qui peut être distinct du premier groupe G.

Le caractère homomorphe de la fonction B implique que, quels que soient les éléments a et b au sein du premier groupe G, B(a).B(b) = B(a+b).

On utilise par exemple pour fonction de chiffrement homomorphe B une fonction de Benaloh modifiée du type :

$$B(a) = y^a u^r \bmod p,$$

où p est un nombre premier, y et u sont des nombres entiers compris entre 1 et p-1, et r est de la forme $r = 2^k$ (k étant supérieur ou égal à 2, de préférence supérieur ou égal à la taille en bits des mots $M_i$ appliqués en entrée de la fonction B), r divisant en outre l'ordre du second groupe G'. Ce type de fonction est décrit dans l'article *"Dense probabilistic encryption"*, Josh Benaloh, in Proceedings of the Workshop on selected areas of Cryptography, 1994. On peut prévoir à cet égard que l'ordre du nombre y ne soit pas égal à l'ordre du second groupe G' divisé par r. La longueur du nombre p exprimé en bits (soit $\log^2 p$) est par exemple comprise en 4 bits et 32 bits (c'est-à-dire que, avec le bit de poids fort à 1 pour des raisons de sécurité, p est par exemple compris entre $2^3$ et $2^{32}-1$).

Selon une possibilité de réalisation, grâce aux propriétés de la fonction de Benaloh utilisée ici, on peut utiliser différentes valeurs du nombre u pour les différentes applications de la fonction de chiffrement homomorphe B aux différents mots $M_i$.

Les valeurs images B(a) sont donc comprises entre 1 et p-1 et le second groupe G' est donc ici un groupe fini à (p-1) éléments (l'opération notée "." étant la multiplication dans $(\mathbf{Z}/p\mathbf{Z})^*$).

On utilise par exemple des mots $M_i$ ayant une longueur en bits égale à la longueur du nombre p exprimé sous forme de bits (soit $\log^2 p$, où $\log^2$ est le logarithme en base 2). Dans le cas où des bits aléatoires sont utilisés comme décrit ci-dessus, on prend alors par exemple $\sigma = (\log^2 p - 1)$ ou $\sigma = (\log^2 p - 2)$.

On remarque que l'on choisit de préférence r de telle façon qu'il divise (p-1).

En pratique, l'étape E2 est par exemple mise en œuvre au moyen d'au moins une première table de correspondance T1, mémorisée par exemple dans le module de mémorisation 6.

Cette première table de correspondance mémorise, pour chaque élément a du premier groupe G (c'est-à-dire pour chaque valeur possible de a), la valeur image de cet élément a par la fonction de chiffrement homomorphe B, c'est-à-dire la valeur B(a).

Dans ce cas, l'étape E2 comprend, pour chaque mot $M_i$, la lecture du cryptogramme d'entrée $C_i$ associé à ce mot $M_i$ dans la première table de correspondance T1.

En variante, on peut prévoir d'utiliser une pluralité de premières tables de correspondances $T1_i$ pour traitement des différents mots $M_i$, respectivement.

Ainsi, dans le cas décrit ici où on utilise N mots $M_i$, on peut utiliser N premières tables de correspondance $M_i$. Les différentes premières tables de correspondance $T1_i$ sont par exemple formées en utilisant des valeurs différentes de u dans la formule définissant la fonction B ci-dessus (et/ou des bits aléatoires $s_1,..., s_\sigma$ différents dans les variantes où de tels bits aléatoires sont utilisés, comme expliqué ci-dessus).

Autrement dit, dans ce cas, chaque première table de correspondance $T1_i$ mémorise, pour chaque élément a du premier groupe G, la valeur $y^a u_i^r \bmod p$, les valeurs de $u_i$ étant différentes deux à deux pour i variant de 0 à N-1.

Dans ce cas, l'étape E2 comprend, pour chaque mot $M_i$ d'indice i, la lecture du cryptogramme d'entrée $C_i$ associé à ce mot $M_i$ dans la première table de correspondance $T1_i$ d'indice i.

Selon une autre variante envisageable, la première table de correspondance T1 peut directement convertir un bit $I_i$ du multiplet d'entrée I en l'image $B(M_i)$ du mot $M_i$ (associé à ce bit $I_i$) par la fonction de chiffrement homomorphe B. (Comme indiqué ci-dessus, le mot $M_i$ peut être de la forme $M_i = (0\|I_i)$, $M_i = (s_\sigma\|...\|s_1\|I_i)$ ou $M_i = (s_\sigma\|...\|s_1\| 0\|I_i)$.)

Dans ce cas également, on peut utiliser plusieurs premières tables de correspondance $T1_i$ respectivement pour les différents bits $I_i$ du multiplet d'entrée I (les différentes premières tables de correspondance $T1_i$ pouvant être construites avec des bits aléatoires $s_1,..., s_\sigma$ différents, comme expliqué ci-dessus, lorsque de tels bits aléatoires sont utilisés).

Selon une autre variante encore, dans le cas où les mots $M_i$ sont de la forme $M_i = (0\| I_{2i+1}\|0\|I_{2i})$, la première table de correspondance T1 peut convertir une pluralité de bits (ici 2 bits $I_{2i+1}$, $I_{2i}$) du multiplet d'entrée en l'image $B(M_i)$ du mot $M_i$ (associé à ces bits $I_{2i+1}$, $I_{2i}$) par la fonction de chiffrement homomorphe B.

Dans ce cas également, on peut utiliser plusieurs premières tables de correspondance $T1_i$ respectivement pour les différents ensembles bits (ici couples de bits $I_{2i+1}$, $I_{2i}$) du multiplet d'entrée I (les différentes premières tables

de correspondance T1$_i$ pouvant être construites avec des bits aléatoires s$_1$,..., s$_\sigma$ différents, comme expliqué ci-dessus, lorsque de tels bits aléatoires sont utilisés).

Selon une autre variante envisageable, la première table de correspondance T1 peut associer, à tout multiplet (ici octet) de la forme e$_7$e$_6$...e$_0$ (où les e$_j$ sont les bits de ce multiplet), la valeur B(e$_7$∥e$_6$∥...∥e$_1$∥0∥e$_0$) ou la valeur B$_{e7...e3}$(e$_2$∥e$_1$∥0∥e$_0$), avec B$_{e7...e3}$ la fonction de Benaloh proposée ci-dessus dans laquelle le nombre u est défini en fonction des bits e$_7$e$_6$...e$_3$.

Dans ce cas, lors de l'étape E2, pour chaque bit I$_i$ du multiplet d'entrée I, le processeur 4 détermine de manière aléatoire une séquence de bits (ici une séquence de 7 bits) α$_1$, ..., α$_7$ et lit, dans la première table de correspondance T1, le cryptogramme d'entrée C$_i$ associé au multiplet (α$_7$∥...∥α$_1$∥I$_i$) comprenant les bits α$_1$, ..., α$_7$ déterminés de manière aléatoire et le bit I$_i$ concerné du multiplet d'entée I.

Après l'étape E2, le procédé de la figure 2 comprend une boucle (étapes E4 à E8) qui permet un nombre prédéterminé de passages aux étapes E4, E5 et E6.

Ces passages successifs aux étapes E4, E5 et E6, décrits ci-dessous visent, à chaque passage, à réaliser l'une des opérations logiques booléennes prévues comme indiqué ci-dessus, chacune de ces opérations logiques booléennes devant être appliquée à un bit I$_i$ du multiplet d'entrée I (pour les premières opérations logiques booléennes effectuées), ou à un bit intermédiaire a$_i$ obtenu par une opération booléenne précédente, en utilisant éventuellement en outre des bits prédéfinis (tels que des bits d'une clé cryptographique que l'on souhaite appliquer, au moyen d'un algorithme cryptographique, au multiplet d'entrée I).

Comme expliqué à présent, chacune de ces opérations logiques booléennes est réalisée au moyen d'une application de l'opération "." (opération du second groupe G') à des cryptogrammes A$_i$ (chacun de ces cryptogrammes A$_i$ étant soit un cryptogramme d'entrée C$_i$ obtenu à l'étape E2, soit un cryptogramme intermédiaire dérivé des cryptogrammes d'entrée C$_i$ par des opérations précédentes).

Ainsi, pour mettre en œuvre une opération logique booléenne entre un premier bit a$_i$ et un second bit b$_i$, le processeur 4 effectue à l'étape E5 l'opération A$_i$.B$_i$ entre l'image, par la fonction de chiffrement homomorphe B, d'un premier mot, ici (0∥a$_i$), comprenant le premier bit a$_i$, et l'image, par la fonction de chiffrement homomorphe B, d'un second mot, ici (0∥b$_i$), comprenant le second bit b$_i$ (c'est-à-dire A$_i$ = B(0∥a$_i$) et B$_i$ = B(0∥b$_i$)).

Chaque cryptogramme intermédiaire est ainsi l'image, par la fonction de chiffrement homomorphe, d'un mot comprenant un bit donné a$_i$ ; b$_i$ (définissant ce que représente ce mot) et un autre bit, de poids immédiatement supérieur à celui du bit donné, ayant la valeur prédéfinie. Comme expliqué dans la suite, une étape de nettoyage est mise en œuvre au besoin pour assurer cela.

Comme déjà indiqué, les images A$_i$, B$_i$ impliquées dans cette opération sont soit les cryptogrammes d'entrée C$_i$ obtenus à l'étape E2, soit les résultats de passages précédents aux étapes E4 à E6, soit des cryptogrammes mémorisés dans le module de mémorisation 6 (et qui représentent respectivement les bits prédéfinis susmentionnés, par exemple des bits d'une clé cryptographique).

En effet, les inventeurs ont remarqué que, grâce à la propriété d'homomorphisme, on a quels que soient a$_i$ et b$_i$ :

$$B(0 \parallel a_i).B(0 \parallel b_i) = B[(0 \parallel a_i) + (0 \parallel b_i)] = B(a_i \text{ AND } b_i \parallel a_i \text{ XOR } b_i),$$

où AND et XOR sont respectivement les opérations logiques booléennes *"et"* et *"ou exclusif"*.

(Cette observation reste valable dans la variante décrite ci-dessus où les mots M$_i$ comprennent plusieurs bits I$_i$ du multiplet d'entrée I du fait que :

B(0∥a$_{i+1}$∥0∥a$_i$).B(0∥b$_{i+1}$∥0∥b$_i$)=B(a$_{i+1}$ANDb$_{i+1}$∥a$_{i+1}$XORb$_{i+1}$∥a$_i$ANDb$_i$∥a$_i$XORb$_i$). De même, cette observation reste valable dans les variantes où les cryptogrammes sont générés à l'étape E2 en utilisant des bits de poids forts aléatoires puisque ces bits de poids forts n'interviennent pas dans les opérations entre bits de poids faibles qui sont réalisées comme il vient d'être décrit.)

On explique dans la suite quel traitement appliquer (éventuellement) au produit ainsi obtenu pour sélectionner, en tant que valeur à utiliser dans la suite du traitement (selon l'opération logique booléenne à effectuer par le passage courant aux étapes E4 à E6), soit la valeur (a$_i$ AND b$_i$), soit la valeur (a$_i$ XOR b$_i$).

Le traitement de l'étape E5 produit ainsi un cryptogramme A$_i$.B$_i$ = B(a$_i$ AND b$_i$∥a$_i$ XOR b$_i$) qui est l'image par la fonction de chiffrement homomorphe B d'un mot incluant la combinaison logique booléenne (ici par *"et"* ou par *"ou exclusif"*) de deux bits a$_i$, b$_i$ compris respectivement dans deux mots (0∥a$_i$) et (0∥b$_i$) antécédents, pour la fonction de chiffrement homomorphe B, desdits deux cryptogrammes intermédiaires A$_i$, B$_i$.

On remarque que les bits a$_i$, b$_i$ ne sont jamais manipulés en tant que tels, mais toujours par le biais de l'opération du second groupe G' (notée ici ".") sur les cryptogrammes intermédiaires A$_i$, B$_i$ qui représentent ces bits a$_i$, b$_i$.

Selon l'opération logique à effectuer (sur les bits a$_i$, b$_i$) lors du passage courant aux étapes E4 à E6, le processeur 4 met par ailleurs éventuellement en œuvre des étapes additionnelles, à savoir ici une étape E4 de nettoyage des cryptogrammes A$_i$, B$_i$ (correspondant respectivement aux bits a$_i$, b$_i$ à traiter) et une étape E6 de mise en forme du

cryptogramme $A_i.B_i$ obtenu à l'étape E5.

Dans certains cas en effet, aucune étape additionnelle E4, E6 n'est nécessaire ; les cryptogrammes $A_i$, $B_i$ peuvent être directement traités à l'étape E5 et le cryptogramme produit $A_i.B_i$ obtenu peut être directement utilisé pour traitement ultérieur, c'est-à-dire soit pour réaliser une nouvelle opération booléenne à l'étape E5, soit pour générer le multiplet de sortie à l'étape E10 (décrite plus bas).

Dans l'exemple décrit ici, aucun traitement n'est mis en œuvre aux étapes additionnelles E4, E6 lorsque l'opération logique booléenne à réaliser par l'itération courante (c'est-à-dire le passage courant aux étapes E4 à E6) est une opération de *"ou exclusif"*.

En effet, comme expliqué ci-dessus, le bit de poids faible de l'antécédent $(a_i$ AND $b_i \| a_i$ XOR $b_i)$ du cryptogramme $A_i.B_i$ vaut dans ce cas $(a_i$ XOR $b_i)$ et le cryptogramme $A_i.B_i$ obtenu à l'étape E5 peut donc être utilisé comme représentant d'un nouveau bit intermédiaire, égal à $a_i$ XOR $b_i$, lors d'un passage ultérieur à l'étape E5 (ou lors de la génération du multiplet de sortie à l'étape E10).

On remarque en outre à cet égard que, dans l'exemple décrit ici, il n'est pas nécessaire, avant d'effectuer l'étape E5 pour réaliser une opération logique booléenne de *"ou exclusif"*, de s'assurer que les antécédents des cryptogrammes $A_i$, $B_i$ traités lors de cette étape E4 soient de la forme $(0 \| a_i)$, $(0 \| b_i)$. En effet, quelles que soient les valeurs de x et de y, on a : $(x \| a_i) + (y \| b_i) = (z \| a_i$ XOR $b_i)$, où z dépend quant à lui de x et de y.

En revanche, lorsque l'itération courante des étapes E4 à E6 vise à réaliser une opération logique booléenne *"et"*, il convient d'appliquer aux cryptogrammes $A_i$, $B_i$, $A_i.B_i$ les traitements suivants :

- une étape de nettoyage E4, antérieure à l'étape E5, qui vise à s'assurer que, pour chaque cryptogramme $A_i$, $B_i$ à traiter, l'antécédent de ce cryptogramme comprend un premier bit et un second bit, de poids immédiatement supérieur au premier bit, ayant la valeur prédéfinie, c'est-à-dire que cet antécédent est de la forme $(0 \| a_i)$, $(0 \| b_i)$, où comme précédemment $a_i$ et $b_i$ sont les bits pour lesquels on souhaite calculer l'opération booléenne *"et"* et qui sont respectivement représentés par les cryptogrammes $A_i$ et $B_i$ ;

- une étape de mise en forme E6, postérieure à l'étape E5, qui permet de replacer le bit $(a_i$ AND $b_i)$ en tant que bit de poids faible du cryptogramme représentant ce nouveau bit intermédiaire $(a_i$ AND $b_i)$, de manière à pouvoir utiliser ce cryptogramme comme décrit ci-dessus lors d'un passage ultérieur aux étapes E4 à E6.

L'étape de nettoyage E4 vise donc à conserver tout cryptogramme $A_i$, $B_i$ qui peut s'écrire $B(0 \| d_i)$, c'est-à-dire tout cryptogramme qui est l'image par la fonction de chiffrement homomorphe d'un mot dont le bit de poids fort a la valeur prédéfinie (ici 0), et à transformer en un nouveau cryptogramme $B(0 \| d_i)$ tout cryptogramme $A_i$, $B_i$ qui peut s'écrire $B(1 \| d_i)$, c'est-à-dire tout cryptogramme qui est l'image par la fonction de chiffrement homomorphe d'un mot dont le bit de poids fort n'a pas la valeur prédéfinie.

L'étape de nettoyage E4 est par exemple mise en œuvre au moyen d'une seconde table de correspondance T2 qui, pour tout $d_i$, associe à tout cryptogramme de la forme $B(0 \| d_i)$ un cryptogramme de la forme $B(0 \| d_i)$, éventuellement identique au cryptogramme en entrée de la seconde table de correspondance T2, et à tout cryptogramme de la forme $B(1 \| d_i)$ un cryptogramme de la forme $B(0 \| d_i)$.

Cette seconde table de correspondance T2 est par exemple mémorisée dans le module de mémorisation 6.

Dans ce cas, lorsque l'on souhaite traiter par l'opération logique booléenne concernée (ici *"et"*) un bit $a_i$ représenté en entrée par un cryptogramme $A_i$ et un bit $b_i$ représenté en entrée par un cryptogramme $B_i$, le processeur 4 lit à l'étape de nettoyage E4 un cryptogramme $A'_i$ associé au cryptogramme $A_i$ dans la seconde table de correspondance T2, et un cryptogramme $B'_i$ associé au cryptogramme $B_i$ dans la seconde table de correspondance T2.

Les cryptogrammes $A'_i$ et $B'_i$ ainsi obtenus en sortie de l'étape E4 sont ceux utilisés pour traitement par l'opération "." au cours de l'étape E5 comme décrit ci-dessus.

L'étape de mise en forme E6 vise comme indiqué plus haut à transformer le cryptogramme $B(a_i$ AND $b_i \| a_i$ XOR $b_i)$ (obtenu au moyen de l'étape E5 comme indiqué ci-dessus) en un cryptogramme $B(x \| a_i$ AND $b_i)$, où x est un bit quelconque.

Autrement dit, l'étape de mise en forme E6 revient à appliquer au cryptogramme concerné l'inverse de la fonction de chiffrement homomorphe, à décaler d'un bit vers la droite le mot obtenu, et à appliquer à nouveau la fonction de chiffrement homomorphe.

En pratique, l'étape de mise en forme E6 peut être mise en œuvre au moyen d'une troisième table de correspondance T3 qui à tout cryptogramme de la forme $B(d_i \| z_i)$ (c'est-à-dire à tout cryptogramme ayant un antécédent de bit de poids fort $d_i$ par la fonction de chiffrement homomorphe B) associe un cryptogramme de la forme $B(x \| d_i)$ (c'est-à-dire un cryptogramme ayant un antécédent, par la fonction de chiffrement homomorphe B, de bit de poids faible $d_i$).

Cette troisième table de correspondance T3 est par exemple mémorisée dans le module de mémorisation 6.

Dans ce cas, à l'étape de mise en forme E6, le processeur 4 lit, dans la troisième table de correspondance T3, le cryptogramme associé au cryptogramme obtenu à l'étape E5, le cryptogramme lu étant utilisé pour représenter le

nouveau bit intermédiaire ($a_i$ AND $b_i$) dans la suite du traitement.

Après l'étape de mise en forme E6, le processeur 4 détermine à l'étape E8 si le traitement effectué implique au moins une autre opération logique booléenne (mise en œuvre ici au moyen de l'application de l'opération "." à des cryptogrammes). On rappelle que le processeur 4 est programmé pour réaliser une séquence d'opérations logiques booléennes, comme décrit par exemple dans l'article *"A new combinational logic minimization technique with applications to cryptology"* précité.

S'il reste au moins une opération logique booléenne à réaliser, le procédé boucle à l'étape E4 pour mise en œuvre d'une nouvelle itération des étapes E4 à E6.

Si toutes les opérations logiques booléennes ont été réalisées, le procédé se poursuit à l'étape E10 décrite à présent.

A l'étape E10, le processeur 4 génère le multiplet de sortie O sur la base de cryptogrammes intermédiaires obtenus lors de précédents passages aux étapes E4 à E6 et qui représentent respectivement les différents bits $O_i$ du multiplet de sortie O.

Les cryptogrammes intermédiaires utilisés en tant que cryptogramme de sortie $C'_i$, c'est-à-dire pour représenter les bits $O_i$ du multiplet de sortie O, sont déterminés d'après la séquence d'opérations logiques booléennes que l'on souhaite mettre en œuvre (chaque cryptogramme intermédiaire représentant un bit intermédiaire manipulé au cours de cette séquence d'opérations logiques booléennes).

Le processeur 4 détermine les bits $O_i$ du multiplet de sortie O en appliquant respectivement à ces cryptogrammes de sortie $C'_i$ une fonction $B^{-1}$ inverse de la fonction de chiffrement homomorphe B.

En pratique, l'application de cette fonction inverse peut être mise en œuvre au moyen d'une quatrième table de correspondance T4, mémorisée par exemple dans le module de mémorisation 6.

Cette quatrième table de correspondance T4 mémorise, pour chaque valeur possible Z pour un cryptogramme, le mot $B^{-1}(Z)$, c'est-à-dire l'antécédent de Z par la fonction de chiffrement homomorphe B.

Le processeur 4 détermine dans ce cas chaque bit $O_i$ du multiplet de sortie O par lecture, dans la quatrième table de correspondance T4, du mot $B^{-1}(C'_i)$ associé au cryptogramme de sortie $C'_i$ concerné, le bit $O_i$ du multiplet de sortie O étant un bit prédéfini (ici le bit de poids faible) du mot $B^{-1}(C'_i)$.

En variante, la quatrième table de correspondance T4 pourrait associer directement, à chaque valeur possible Z pour un cryptogramme, le bit de poids faible du mot $B^{-1}(Z)$ antécédent de cette valeur Z par la fonction de chiffrement homomorphe B.

Selon une autre variante encore, la première table de correspondance T1 pourrait être utilisée par le processeur 4 pour appliquer la fonction inverse $B^{-1}$ aux cryptogrammes de sortie $C'_i$.

Dans l'exemple qui vient d'être décrit, le premier groupe G est un groupe additif utilisant un cryptosystème de type Benaloh pour définir la fonction de chiffrement homomorphe B.

Toujours dans le cas d'un premier groupe additif, on peut utiliser en variante un cryptosystème de type Paillier, comme introduit dans l'article *"Public-key cryptosystems based on composite degree residuosity classes"*, Pascal Paillier, in International Conference on the Theory and Application of Cryptographic Techniques, Springer, Berlin, Heidelberg, 1999.

Selon une autre variante, le premier groupe G peut être un groupe multiplicatif.

Dans le cadre de cette variante, on utilise par exemple une fonction de chiffrement homomorphe (notée E dans cette variante) basée sur un cryptosystème de type ElGamal, décrit dans l'article *"A Public Key Cryptosystem and a Signature Scheme Based on Discrete Logarithms"*, Taher ElGamal, in Crypto, Springer, 1984.

Grâce à la propriété d'homomorphisme de ce type de fonction de chiffrement, on a, quels que soient les bits a, b : $E(1\|a).E(1\|b) = E(a\ XOR\ b\|a\ AND\ b)$ ; on peut donc dans cette variante également réaliser l'une ou l'autre des deux opérations logiques booléennes *"et"* et *"ou exclusif"* au moyen d'une opération (ici également de multiplication) au sein du second groupe G'.

Selon une autre variante, éventuellement combinable avec celles décrites précédemment, les cryptogrammes manipulés sont masqués par un masque aléatoire t (ici multiplicatif). Ce masque aléatoire est par exemple déterminé (par tirage aléatoire) au cours d'une phase de préparation du dispositif électronique 2 et mémorisé dans le module de mémorisation 6.

Pour ce faire, lors de l'étape E2, le processeur applique le masque aléatoire t aux cryptogrammes $C_i$ au moyen de l'opération ".". Les étapes suivantes sont alors appliquées au cryptogramme ainsi masqué, à savoir $t.C_i$.

Selon une possibilité de réalisation, une pluralité de masques aléatoires $t_i$ (*a priori* distincts deux à deux) peuvent être respectivement appliqués aux différents cryptogrammes $C_i$ produits lors de l'étape E2.

Dans les deux cas, l'application du masque t, $t_i$ peut être réalisée, en même temps que l'application de la fonction de chiffrement homomorphe B, au moyen de la première table de correspondance T1. Autrement dit, la première table de correspondance T1 mémorise dans ce cas, pour chaque valeur possible au sein du premier groupe G, le cryptogramme associé $t.B(a)$.

Les autres tables de correspondance T2, T3, T4 sont par ailleurs adaptées (avant leur mémorisation dans le module de mémorisation 6) pour tenir compte du masque appliqué. On peut prévoir dans ce cas que des secondes et troisièmes tables de correspondance T2, T3 soient prévues respectivement pour chaque opération booléenne mise en œuvre au moyen de l'opération "." afin de tenir compte du masque t utilisé.

On décrit à présent une autre variante selon laquelle les cryptogrammes d'entrée $C_i$ sont combinés deux à deux au moyen d'une fonction de recombinaison selon le théorème des restes chinois.

Dans ce cas, certains cryptogrammes (par exemple ceux correspondant aux bits de rang pair du multiplet d'entrée I, ces cryptogrammes étant notés de ce fait $C_{2i}$) sont obtenus comme indiqué précédemment en appliquant la fonction de chiffrement homomorphe B, à valeurs dans le second groupe G' à (p-1) éléments, au mot correspondant $(0\|I_{2i})$.

D'autres cryptogrammes (par exemple ceux correspondant aux bits de range impair du multiplet d'entrée, ces cryptogrammes étant notés de ce fait $C_{2i+1}$) sont obtenus en appliquant une autre fonction de chiffrement homomorphe B', à valeurs dans un troisième groupe G" à (q-1) éléments, au mot correspondant $(0\|I_{2i+1})$, avec q un nombre premier différent de p.

La fonction B' est par exemple définie par : $B'(b) = y^b.u^r \bmod q$.

Les cryptogrammes d'entrée sont alors combinés deux à deux au moyen d'une fonction de recombinaison selon le théorème des restes chinois (en anglais CRT pour *"Chinese Remainder Theorem"*). Ici, on combine les cryptogrammes d'entrée $C_{2i}$ et $C_{2i+1}$ comme suit :

$$A_i = CRT(C_{2i}, C_{2i+1}) = C_{2i}.q.i_q + C_{2i+1}.p.i_p$$

où $i_p$ et $i_q$ sont tels que $q.i_q = 1 \bmod p$ et $p.i_p = 1 \bmod q$ (et on a $q.i_q = 0 \bmod q$ et $p.i_p = 0 \bmod p$).

Les cryptogrammes $A_i$ obtenus par cette combinaison sont ceux qui sont manipulés lors des passages successifs aux étapes E4 à E6.

Ainsi, le produit $A_i.B_i$ de deux cryptogrammes $A_i$, $B_i$ ($A_i$ représentant les cryptogrammes X et X' : $A_i = CRT(X, X')$ et $B_i$ représentant les cryptogrammes Y et Y' : $B_i = CRT(Y, Y')$) permet d'effectuer des opérations sur les deux bits représentés par chacun de ces cryptogrammes $A_i$, $B_i$.

En effet : $A_i.B_i \bmod p = (X.q.i_q + X'.p.i_p) . (Y.q.i_q + Y'.p.i_p) \bmod p = X.Y$ .

De même : $A_i.B_i \bmod q = (X.q.i_q + X'.p.i_p) . (Y.q.i_q + Y'.p.i_p) \bmod q = X'.Y'$ .

On peut ainsi retrouver les produits X.Y et X'.Y' (correspondant à ceux obtenus à l'étape E5 dans le mode de réalisation décrit ci-dessus) en déterminant respectivement le reste modulo p et le reste module q du produit $A_i.B_i$.

## Revendications

**1.** Procédé de traitement cryptographique transformant un multiplet d'entrée en un multiplet de sortie, **caractérisé par** les étapes suivantes :

- conversion (E2) d'une pluralité de mots, comprenant chacun au moins un bit du multiplet d'entrée, en cryptogrammes d'entrée par application, à chacun desdits mots, d'une fonction de chiffrement homomorphe d'un premier groupe vers un second groupe muni d'une opération ;
- obtention de cryptogrammes de sortie en fonction des cryptogrammes d'entrée, cette étape d'obtention incluant au moins un traitement au cours duquel ladite opération (E5) est appliquée à deux cryptogrammes intermédiaires, ce traitement produisant un cryptogramme image par la fonction de chiffrement homomorphe d'un mot incluant une combinaison logique booléenne de deux bits compris respectivement dans deux mots antécédents, pour la fonction de chiffrement homomorphe, desdits deux cryptogrammes intermédiaires ;
- détermination (E10) de bits du multiplet de sortie en appliquant respectivement aux cryptogrammes de sortie une fonction inverse de la fonction de chiffrement homomorphe.

**2.** Procédé selon la revendication 1, dans lequel, pour chaque cryptogramme intermédiaire, l'antécédent de ce cryptogramme intermédiaire par la fonction de chiffrement homomorphe comprend un premier bit et un second bit, de poids immédiatement supérieur au premier bit, ayant une valeur prédéfinie.

**3.** Procédé selon la revendication 1, dans lequel l'étape de conversion (E2) est appliquée à des mots comprenant chacun un premier bit égal à un bit du multiplet d'entrée et un second bit, de poids immédiatement supérieur au premier bit, ayant une valeur prédéfinie.

**4.** Procédé selon l'une des revendications 1 à 3, comprenant une étape de détermination par tirage aléatoire d'un mot binaire comprenant au moins un bit, dans lequel l'étape de conversion (E2) est appliquée à des mots comprenant chacun ledit mot binaire et un bit donné égal à un bit du multiplet d'entrée.

5. Procédé selon l'une des revendications 1 à 4, dans lequel l'étape de conversion (E2) est appliquée à des mots comprenant chacun une pluralité de bits du multiplet d'entrée.

6. Procédé selon l'une des revendications 1 à 5, dans lequel le traitement comprend la lecture d'un cryptogramme associé, dans une table de correspondance, au résultat de l'opération appliquée aux deux cryptogrammes intermédiaires.

7. Procédé selon l'une des revendications 1 à 6, dans lequel l'étape de conversion (E2) comprend une étape d'application de l'opération à un cryptogramme d'entrée et à un masque.

8. Procédé selon l'une des revendications 1 à 7, dans lequel l'étape d'obtention comprend une étape de combinaison de deux cryptogrammes d'entrée par une fonction de recombinaison selon le théorème des restes chinois.

9. Procédé selon l'une des revendications 1 à 8, dans lequel l'opération est une multiplication et dans lequel le second groupe est un corps fini.

10. Dispositif électronique comprenant un processeur et une mémoire stockant des instructions de programme d'ordinateur conçues pour mettre en œuvre les étapes suivantes lorsque ces instructions sont exécutées par le processeur :

- conversion d'une pluralité de mots, comprenant chacun au moins un bit d'un multiplet d'entrée, en cryptogrammes d'entrée par application, à chacun desdits mots, d'une fonction de chiffrement homomorphe d'un premier groupe vers un second groupe muni d'une opération ;
- obtention de cryptogrammes de sortie en fonction des cryptogrammes d'entrée, cette étape d'obtention incluant au moins un traitement au cours duquel ladite opération est appliquée à deux cryptogrammes intermédiaires, ce traitement produisant un cryptogramme image par la fonction de chiffrement homomorphe d'un mot incluant une combinaison logique booléenne de deux bits compris respectivement dans deux mots antécédents, pour la fonction de chiffrement homomorphe, desdits deux cryptogrammes intermédiaires ;
- détermination de bits d'un multiplet de sortie en appliquant respectivement aux cryptogrammes de sortie une fonction inverse de la fonction de chiffrement homomorphe.

11. Programme d'ordinateur comprenant des instructions conçues pour mettre en œuvre les étapes suivantes lorsque ces instructions sont exécutées par un processeur :

- conversion d'une pluralité de mots, comprenant chacun au moins un bit d'un multiplet d'entrée, en cryptogrammes d'entrée par application, à chacun desdits mots, d'une fonction de chiffrement homomorphe d'un premier groupe vers un second groupe muni d'une opération ;
- obtention de cryptogrammes de sortie en fonction des cryptogrammes d'entrée, cette étape d'obtention incluant au moins un traitement au cours duquel ladite opération est appliquée à deux cryptogrammes intermédiaires, ce traitement produisant un cryptogramme image par la fonction de chiffrement homomorphe d'un mot incluant une combinaison logique booléenne de deux bits compris respectivement dans deux mots antécédents, pour la fonction de chiffrement homomorphe, desdits deux cryptogrammes intermédiaires ;
- détermination de bits d'un multiplet de sortie en appliquant respectivement aux cryptogrammes de sortie une fonction inverse de la fonction de chiffrement homomorphe.

# Fig.1

# Fig.2

Europäisches
Patentamt

European
Patent Office

Office européen
des brevets

**RAPPORT DE RECHERCHE EUROPEENNE**

Numéro de la demande

EP 20 21 3485

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2018/124869 A1 (UNIV MOHAMMED V RABAT [MA]) 5 juillet 2018 (2018-07-05) * pages 3,6-8 * ----- | 1-4,6-11 | INV. H04L9/00 |
| X | DE 10 2011 012328 A1 (UNIV HANNOVER [DE]) 30 août 2012 (2012-08-30) * alinéas [0048] - [0061] * ----- | 1,3,5-8, 10,11 | |
| A,D | JOAN BOYAR ET AL: "A New Combinational Logic Minimization Technique with Applications to Cryptology", 20 mai 2010 (2010-05-20), EXPERIMENTAL ALGORITHMS, SPRINGER BERLIN HEIDELBERG, BERLIN, HEIDELBERG, PAGE(S) 178 - 189, XP019142559, ISBN: 978-3-642-13192-9 * le document en entier * ----- | 1-11 | |

**DOMAINES TECHNIQUES RECHERCHES (IPC)**

H04L

Le présent rapport a été établi pour toutes les revendications

| Lieu de la recherche | Date d'achèvement de la recherche | Examinateur |
|---|---|---|
| Munich | 3 mai 2021 | Manet, Pascal |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

........................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 20 21 3485

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-05-2021

| Document brevet cité au rapport de recherche | Date de publication | Membre(s) de la famille de brevet(s) | Date de publication |
|---|---|---|---|
| WO 2018124869 A1 | 05-07-2018 | MA 39664 B1<br>WO 2018124869 A1 | 28-09-2018<br>05-07-2018 |
| DE 102011012328 A1 | 30-08-2012 | DE 102011012328 A1<br>EP 2678772 A2<br>WO 2012113908 A2 | 30-08-2012<br>01-01-2014<br>30-08-2012 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE S. CHOW et al.** White Box Cryptogrophy and on AES implementation. *Post-Proceedings of the 9th Annual Workshop on Selected Areas in Cryptography (SAC'02),* 15 Août 2002
- A new combinational logic minimization technique with applications to cryptology. **DE J. BOYAR ; R. PERALTA.** International Symposium on Experimental Algorithms. Springer, 2010
- Dense probabilistic encryption. **JOSH BENALOH.** Proceedings of the Workshop on selected areas of Cryptography. 1994
- Public-key cryptosystems bosed on composite degree residuosity classes. **PASCAL PAILLIER.** International Conference on the Theory and Application of Cryptographic Techniques. Springer, 1999
- A Public Key Cryptosystem and a Signature Scheme Based on Discrete Logarithms. **TAHER EIGAMAL.** Crypto. Springer, 1984